# EUROPÄISCHE PATENTSCHRIFT

(11) **EP 2 066 518 B1**
(45) Veröffentlichungstag und Bekanntmachung des Hinweises auf die Patenterteilung: **10.11.2010**
(21) Anmeldenummer: 07820186.0
(22) Anmeldetag: 13.09.2007
(51) Int. Cl.: B60K 15/03, F02M 37/10, F02M 37/00

(54) **KRAFTSTOFF-FÖRDEREINHEIT FÜR EIN KRAFTFAHRZEUG**
FUEL DELIVERY UNIT FOR A MOTOR VEHICLE
UNITÉ D'ALIMENTATION EN CARBURANT POUR UN VÉHICULE AUTOMOBILE

(30) Priorität: 18.09.2006 DE 102006043695
(43) Veröffentlichungstag der Anmeldung: 10.06.2009
(73) Patentinhaber: Continental Automotive GmbH, 30165 Hannover (DE)
(72) Erfinder: ECK, Karl, 60318 Frankfurt (DE); HAGIST, Dieter, 56112 Lahnstein (DE); KADLER, Matthias, 64521 Gross-Gerau (DE); MAASZ, Martin, 65843 Sulzbach (DE); SCHÖNERT, Oliver, 59757 Arnsberg (DE); TEICHERT, Michael, 65824 Schwalbach (DE)
(86) Internationale Anmeldenummer: PCT/EP2007/059645
(87) Internationale Veröffentlichungsnummer: WO 2008/034757

(56) Entgegenhaltungen:
- EP-A- 0 959 242
- EP-A- 1 103 717
- WO-A-2007/085536
- DE-A1- 4 242 242
- DE-A1- 19 932 684
- DE-A1- 19 961 923

## Beschreibung

Die Erfindung betrifft eine Kraftstoff-Fördereinheit für ein Kraftfahrzeug mit einer in einem Schwalltopf angeordneten Kraftstoffpumpe zur Förderung von Kraftstoff aus dem Schwalltopf in eine Vorlaufleitung, mit einer Saugstrahlpumpe zur Förderung von Kraftstoff in den Schwalltopf, mit einer von der Kraftstoffpumpe zu einer Düse des Schwalltopfes führenden Treibmittelleitung und mit einem in den Schwalltopf mündenden Mischrohr der Saugstrahlpumpe, wobei der Schwalltopf einen an einem Boden befestigten Mantel aufweist, der Boden ein der Kraftstoffpumpe zugewandtes Oberteil und ein der Kraftstoffpumpe abgewandtes Unterteil aufweist, und wobei Oberteil und Unterteil gegeneinander abgedichtet sind und zwischen dem Oberteil und dem Unterteil des Bodens kraftstoffführende Bereiche angeordnet sind.

Solche Kraftstoff-Fördereinheiten werden in heutigen Kraftfahrzeugen häufig eingesetzt und sind aus der Praxis bekannt. Bei den bekannten Kraftstoff-Fördereinheiten werden einzelne Bauteile in den meist einstückig gestalteten Schwalltopf eingesetzt und miteinander verbunden. Ein von der Kraftstoffpumpe weg ragender Anschluss für eine Vorlaufleitung ragt meist aus dem Schwalltopf heraus. Da ein in der Vorlaufleitung angeordneter Feinfilter jedoch häufig innerhalb des Schwalltopfes angeordnet ist, wird die Vorlaufleitung von der Kraftstoffpumpe wieder zurück in den Schwalltopf zu dem Feinfilter geführt. Weiterhin wird meist ein Abzweig von der Vorlaufleitung zu der zur Befüllung des Schwalltopfes vorgesehenen Saugstrahlpumpe geführt. Dies führt zu einem sehr großen Bauraum der bekannten Kraftstoff-Fördereinheit und zu einer aufwändigen Montage. Bekannte Kraftstoff-Fördereinheiten sind z.B. in der EP 0959242 A1 und der EP 1103717 A1 beschrieben.

Dabei lassen sich Teilbereiche von kraftstoffführenden Bereichen, wie der Leitungen, innerhalb des Bodens des Schwalltopfes anordnen. Das Oberteil und das Unterteil bilden vorzugsweise schalenförmige Bauteile, welche Abschnitte der Leitungen aufnehmen. Diese Leitungen müssen daher nicht mehr separat montiert werden. Von dem Schwalltopf abstehende Bauteile lassen sich hierdurch einfach vermeiden. Weiterhin ist es durch eine entsprechende Anordnung der Trennebene im Boden möglich, das Oberteil und das Unterteil jeweils als axial entformbare Spritzguss-Formteile zu fertigen.

Der Erfindung liegt das Problem zugrunde, eine Kraftstoff-Fördereinheit der eingangs genannten Art so weiterzubilden, dass sie besonders einfach und kompakt aufgebaut ist.

Die erfindungsgemäße Kraftstoff-Fördereinheit ist dadurch gekennzeichnet, dass die kraftstoffführenden Bereiche des Bodens einen von der Kraftstoffpumpe zu dem im Schwalltopf angeordneten Feinfilter führenden Abschnitt einer Vorlaufleitung aufweisen, wobei der Abschnitt der Vorlaufleitung teilweise von dem Oberteil und dem Unterteil des Bodens begrenzt ist. Vorzugsweise sind das Oberteil und das Unterteil jeweils halbschalenförmig gestaltet und liegen zur Begrenzung des Abschnitts der Vorlaufleitung aneinander an. Dies trägt zu einem besonders kompakten Aufbau der erfindungsgemäßen Kraftstoff-Fördereinheit bei.

Zur weiteren Vereinfachung des konstruktiven Aufbaus der erfindungsgemäßen Kraftstoff-Fördereinheit trägt es bei, wenn die kraftstoffführenden Bereiche des Bodens das Mischrohr der Saugstrahlpumpe aufweisen, wobei das Mischrohr teilweise von dem Oberteil und von dem Unterteil gebildet ist. Vorzugsweise sind das Oberteil und das Unterteil jeweils halbschalenförmig gestaltet und liegen zur Begrenzung des Mischrohres aneinander an. Dies trägt zu einem besonders kompakten Aufbau der erfindungsgemäßen Kraftstoff-Fördereinheit bei.

Zur weiteren Verringerung der Anzahl der Bauteile der erfindungsgemäßen Kraftstoff-Fördereinheit trägt es bei, wenn das Oberteil des Bodens und der Mantel einen im Schwalltopf angeordneten Feinfilter abdichten.

Der bauliche Aufwand zur genauen Ausrichtung der Bauteile der Bodenplatte lässt sich gemäß einer anderen vorteilhaften Weiterbildung der Erfindung besonders gering halten, wenn das Oberteil und das Unterteil des Bodens jeweils aneinander liegende, ringförmige Ränder aufweisen. Vorzugsweise weisen das Oberteil und das Unterteil einander entsprechende Formschlussflächen auf, mit denen sie formschlüssig ineinander greifen.

Zur weiteren Vereinfachung der Ausrichtung der Bauteile des Schwalltopfes trägt es bei, wenn zumindest einer der Ränder des Oberteils oder des Unterteils gegenüber dem Mantel des Schwalltopfes abgedichtet sind. Weiterhin wird hierdurch der Boden des Schwalltopfes zuverlässig abgedichtet.

Das Mischrohr der Saugstrahlpumpe könnte beispielsweise in eine mit einem Bodenventil verschlossene Kammer des Schwalltopfes münden. Zur weiteren Verringerung der Anzahl der Bauteile der erfindungsgemäßen Kraftstoff-Fördereinheit trägt es jedoch bei, wenn das Mischrohr dichtend mit einem einstückig mit dem Mantel des Schwalltopfes gefertigten Steigrohr verbunden ist und wenn das Steigrohr bis in einen von dem Boden entfernten Bereich des vorgesehenen maximalen Füllstandes des Schwalltopfes geführt ist. Durch diese Gestaltung benötigt der Schwalltopf kein Bodenventil, da die Länge des Steigrohres den Füllstand im Schwalltopf begrenzt. Da das Steigrohr am Mantel des Schwalltopfes angeordnet ist und sich über einen Teilbereich dessen Höhe erstreckt, lässt sich der Schwalltopf zusammen mit dem Steigrohr besonders kostengünstig in einer axial entformbaren Spritzgussform fertigen.

Zur weiteren Verringerung der Anzahl der Bauteile der erfindungsgemäßen Kraftstoff-Fördereinheit trägt es gemäß einer anderen vorteilhaften Weiterbildung der Erfindung bei, wenn ein von dem Feinfilter weg führender Abschnitt der Vorlaufleitung einstückig mit dem Mantel des Schwalltopfes gefertigt ist.

Die Montage der erfindungsgemäßen Kraftstoff-Fördereinheit gestaltet sich besonders einfach, wenn Anschlüsse der Düse der Saugstrahlpumpe und des Abschnitts der von der Kraftstoffpumpe zu dem Feinfilter führenden Vorlaufleitung senkrecht zu der Fläche des Bodens des Schwalltopfes ausgerichtet sind. Durch diese Gestaltung lässt sich die Kraftstoffpumpe einfach axial auf die Anschlüsse aufstecken und ist dabei vollständig montiert. Ein Ansauganschluss der Kraftstoffpumpe mündet dabei vorzugsweise in den Bodenbereich des Schwalltopfes.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: schematisch eine Kraftstoff-Versorgungs- einrichtung für eine Brennkraftmaschine eines Kraftfahrzeuges mit einer erfindungsgemäßen Kraftstoff-Fördereinheit.
- Fig. 2: eine Schnittdarstellung der erfindungsgemäßen Kraftstoff-Fördereinheit aus Figur 1,
- Fig. 3: stark vergrößert eine Schnittdarstellung eines Bodens eines Schwalltopfes der erfindungsgemäßen Kraftstoff-Fördereinheit aus Figur 1.

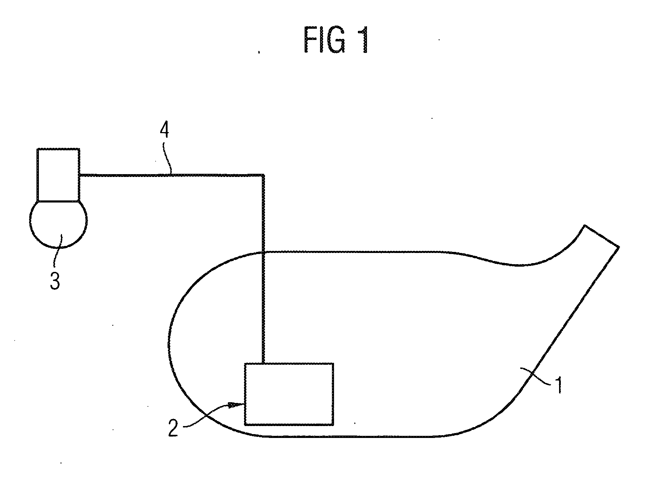

Figur 1 zeigt schematisch eine in einem Kraftstoffbehälter 1 eines Kraftfahrzeuges angeordnete Kraftstoff-Fördereinheit 2 zur Förderung von Kraftstoff zu einer Brennkraftmaschine 3 eines Kraftfahrzeuges. Die Kraftstoff-Fördereinheit 2 saugt Kraftstoff aus dem Bodenbereich des Kraftstoffbehälters 1 an und fördert diesen in eine zu der Brennkraftmaschine 3 führende Vorlaufleitung 4.

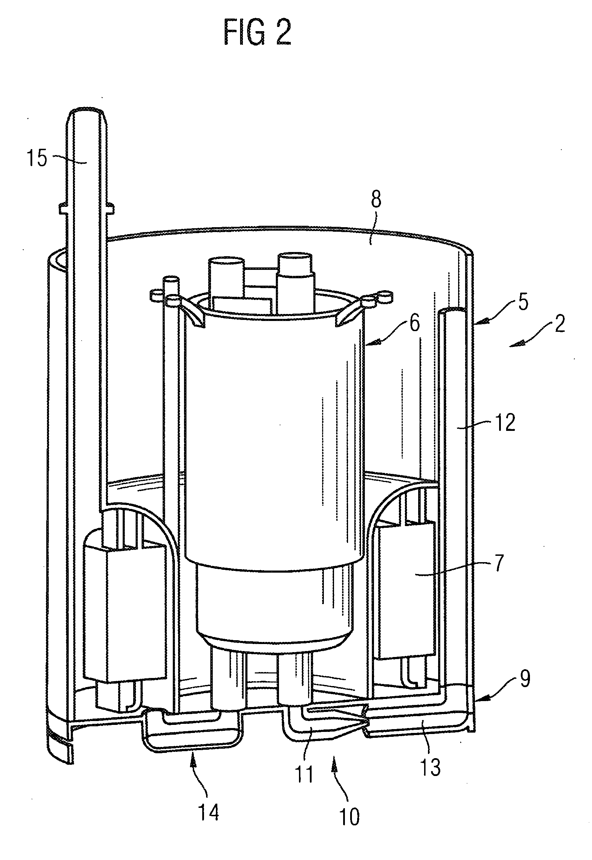

Figur 2 zeigt stark vergrößert eine Schnittdarstellung der Kraftstoff-Fördereinheit 2 aus Figur 1 mit einer in einem Schwalltopf 5 angeordneten, elektrisch betriebenen Kraftstoffpumpe 6. In dem Schwalltopf 5 ist zudem ein Feinfilter 7 angeordnet. Der Schwalltopf 5 weist einen mit einem Mantel 8 verbundenen Boden 9 auf. Der Boden 9 und der Mantel 8 dichten den Feinfilter 7 ab. Der Boden 9 weist zudem eine Saugstrahlpumpe 10 auf. Die Saugstrahlpumpe 10 wird von der Kraftstoffpumpe 6 mit Kraftstoff als Treibmittel versorgt, saugt Kraftstoff aus der Umgebung des Schwalltopfes 5 an und fördert diesen in den Schwalltopf 5. Hierfür weist die Saugstrahlpumpe 10 eine mit der Kraftstoffpumpe 6 verbundene Düse 11 auf. Der Mantel 8 des Schwalltopfes 5 ist einstückig mit einem Steigrohr 12 verbunden. Das Steigrohr 12 ist an einem in dem Boden 9 angeordneten Mischrohr 13 der Saugstrahlpumpe 10 angeschlossen. Weiterhin führt ein Abschnitt 14 der Vorlaufleitung 4 von der Kraftstoffpumpe 6 zu dem Feinfilter 7 durch den Boden 9. Ein weiterer, in Strömungsrichtung gesehen hinter dem Feinfilter 7 angeordneter Abschnitt 15 der Vorlaufleitung 4 ist einstückig mit dem Mantel 8 des Schwalltopfes 5 gefertigt.

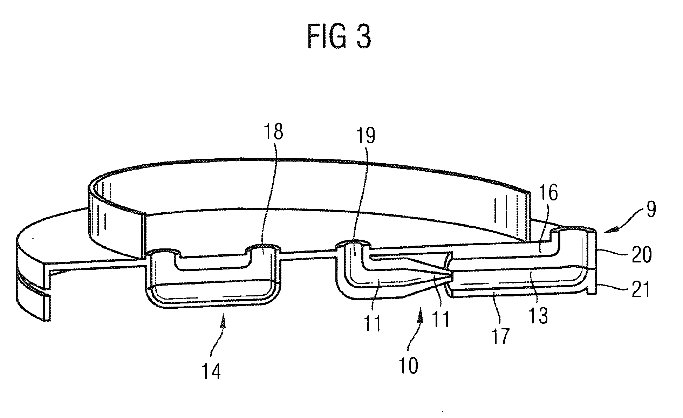

Figur 3 zeigt stark vergrößert den Boden 9 des Schwalltopfes 5 aus Figur 1. Hierbei ist zu erkennen, dass der Boden 9 ein Oberteil 16 und ein dichtend mit dem Oberteil 16 verbundenes Unterteil 17 aufweist. Das Oberteil 16 und das Unterteil 17 bilden jeweils ein Teil des Mischrohrs 13 der Saugstrahlpumpe 10 und den von der Kraftstoffpumpe 6 zu dem Feinfilter 7 führenden Abschnitt 14 der Vorlaufleitung 4. Anschlüsse 18 des zwischen der Kraftstoffpumpe 6 und dem Feinfilter 7 angeordneten Abschnitts 14 der Vorlaufleitung 4 und der Saugstrahlpumpe sind senkrecht zu der Fläche am Boden 9 ausgerichtet, so dass sich die in Figur 2 dargestellte Kraftstoffpumpe 6 zur Montage einfach aufstecken lässt. Weiterhin zeigt Figur 3, dass das Oberteil 16 und das Unterteil 17 des Bodens 9 jeweils aneinander liegende, ringförmige Ränder 20, 21 aufweisen. Die Ränder 20, 21 sind gegenüber dem in Figur 2 dargestellten Mantel 8 des Schwalltopfes 5 abgedichtet.

## Patentansprüche

1. Kraftstoff-Fördereinheit für ein Kraftfahrzeug mit einer in einem Schwalltopf angeordneten Kraftstoffpumpe zur Förderung von Kraftstoff aus dem Schwalltopf in eine Vorlaufleitung, mit einer Saugstrahlpumpe zur Förderung von Kraftstoff in den Schwalltopf, mit einer von der Kraftstoffpumpe zu einer Düse des Schwalltopfes führenden Treibmittelleitung und mit einem in den Schwalltopf mündenden Mischrohr der Saugstrahlpumpe, wobei der Schwalltopf einen an einem Boden befestigten Mantel aufweiset, der Boden (9) ein der Kraftstoffpumpe (6) zugewandtes Oberteil (16) und ein der Kraftstoffpumpe (6) abgewandtes Unterteil (17) aufweist, und wobei Oberteil (16) und Unterteil (17) gegeneinander abgedichtet sind und zwischen dem Oberteil (16) und dem Unterteil (17) des Bodens (9) kraftstoffführende Bereiche angeordnet sind, **dadurch gekennzeichnet, dass** die kraftstoffführenden Bereiche des Bodens (9) einen von der Kraftstoffpumpe (6) zu dem im Schwalltopf (5) angeordneten Feinfilter (7) führenden Abschnitt einer Vorlaufleitung (4) aufweisen, wobei der Abschnitt (14) der Vorlaufleitung (4) teilweise von dem Oberteil (16) und dem Unterteil (17) des Bodens (9) begrenzt ist.

2. Kraftstoff-Fördereinheit nach Anspruch 1, **dadurch gekennzeichnet, dass** die kraftstoffführenden Bereiche des Bodens (9) das Mischrohr (13) der Saugstrahlpumpe (10) aufweisen, wobei das Mischrohr (13) teilweise von dem Oberteil (16) und von dem Unterteil (17) gebildet ist.

3. Kraftstoff-Fördereinheit nach zumindest einem der vorhergehenden Ansprüche, **dadurch gekennzeichnet, dass** das Oberteil (16) des Bodens (9) und der Mantel (8) einen im Schwalltopf (5) angeordneten Feinfilter (7) abdichten.

4. Kraftstoff-Fördereinheit nach zumindest einem der vorhergehenden Ansprüche, **dadurch gekennzeichnet, dass** das Oberteil (16) und das Unterteil (17) des Bodens (9) jeweils aneinander liegende, ringförmige Ränder (20, 21) aufweisen.

5. Kraftstoff-Fördereinheit nach zumindest einem der vorhergehenden Ansprüche, **dadurch gekennzeichnet, dass** zumindest einer der Ränder (20, 21) des Oberteils (16) oder des Unterteils (17) gegenüber dem Mantel (8) des Schwalltopfes (5) abgedichtet sind.

6. Kraftstoff-Fördereinheit nach zumindest einem der vorhergehenden Ansprüche, **dadurch gekennzeichnet, dass** das Mischrohr (13) dichtend mit einem einstückig mit dem Mantel (8) des Schwalltopfes (5) gefertigten Steigrohr (12) verbunden ist und dass das Steigrohr (12) bis in einen von dem Boden (9) entfernten Bereich des vorgesehenen maximalen Füllstandes des Schwalltopfes (5) geführt ist.

7. Kraftstoff-Fördereinheit nach zumindest einem der vorhergehenden Ansprüche, **dadurch gekennzeichnet, dass** ein von dem Feinfilter (7) weg führender Abschnitt (15) der Vorlaufleitung (4) einstückig mit dem Mantel (8) des Schwalltopfes (5) gefertigt ist.

8. Kraftstoff-Fördereinheit nach zumindest einem der vorhergehenden Ansprüche, **dadurch gekennzeichnet, dass** Anschlüsse (18, 19) der Düse (11) der Saugstrahlpumpe (10) und des Abschnitts (14) der von der Kraftstoffpumpe (6) zu dem Feinfilter (7) führenden Vorlaufleitung (4) senkrecht zu der Fläche des Bodens (9) des Schwalltopfes (5) ausgerichtet sind.

## Claims

1. Fuel delivery unit for a motor vehicle, having a fuel pump, which is arranged in a swirl pot, for delivering fuel from the swirl pot into a feed line, having a suction jet pump for delivering fuel into the swirl pot, having a propellant line which leads from the fuel pump to a nozzle of the swirl pot, and having a mixing tube, which opens out into the swirl pot, of the suction jet pump, with the swirl pot having a casing which is fastened to a base, the base (9) has an upper part (16), which faces toward the fuel pump (6), and a lower part (17), which faces away from the fuel pump (6), and the upper part (16) and lower part (17) being sealed off with respect to one another and fuel-guiding regions being arranged between the upper part (16) and the lower part (17) of the base (9), **characterized in that** the fuel-guiding regions of the base (9) have a section, which leads from the fuel pump (6) to the fine filter (7) which is arranged in the swirl pot (5), of a feed line (4), with the section (14) of the feed line (4) being delimited partially by the upper part (16) and the lower part (17) of the base (9).

2. Fuel delivery unit according to Claim 1, **characterized in that** the fuel-guiding regions of the base (9) have the mixing tube (13) of the suction jet pump (10), with the mixing tube (13) being formed partially by the upper part (16) and by the lower part (17).

3. Fuel delivery unit according to at least one of the preceding claims, **characterized in that** the upper part (16) of the base (9) and the casing (8) seal off a fine filter (7) which is arranged in the swirl pot (5).

4. Fuel delivery unit according to at least one of the preceding claims, **characterized in that** the upper part (16) and the lower part (17) of the base (9) each have annular edges (20, 21) which bear against one another.

5. Fuel delivery unit according to at least one of the preceding claims, **characterized in that** at least one of the edges (20, 21) of the upper part (16) or of the lower part (17) are sealed off with respect to the casing (8) of the swirl pot (5).

6. Fuel delivery unit according to at least one of the preceding claims, **characterized in that** the mixing tube (13) is sealingly connected to a riser tube (12) which is formed in one piece with the casing (8) of the swirl pot (5) and **in that** the riser tube (12) extends into a region, which is remote from the base (9), of the intended maximum filling level of the swirl pot (5).

7. Fuel delivery unit according to at least one of the preceding claims, **characterized in that** a section (15), which leads away from the fine filter (7), of the feed line (4) is formed in one piece with the casing (8) of the swirl pot (5).

8. Fuel delivery unit according to at least one of the preceding claims, **characterized in that** ports (18, 19) of the nozzle (11) of the suction jet pump (10) and of the section (14) of the feed line (4), which leads from the fuel pump (6) to the fine filter (7), are aligned perpendicular to the surface of the base (9) of the swirl pot (5).

## Revendications

1. Unité d'alimentation en carburant pour véhicule automobile, comportant une pompe à carburant placée dans un pot d'accumulation en vue d'un transfert de carburant en provenance du pot d'accumulation dans une conduite d'alimentation, une pompe à jet aspirant en vue d'un transfert de carburant dans le pot d'accumulation, une conduite de fluide moteur conduisant de la pompe à jet aspirant vers un gicleur du pot d'accumulation et un tube mélangeur de la pompe à jet aspirant débouchant dans le pot d'accumulation, où le pot d'accumulation comporte une chemise fixée à un fond, le fond (9) comportant une partie supérieure (16) tournée vers la pompe à carburant (6) et une partie inférieure (17) opposée à la pompe à carburant (6), la partie supérieure (16) et la partie inférieure (17) étant étanches l'une par rapport à l'autre et des zones conduisant le carburant étant disposées entre la partie supérieure (16) et la partie inférieure (17) du fond, **caractérisée par le fait que** les zones du fond (9) conduisant le carburant comportent une section d'une conduite d'alimentation (4) qui conduit de la pompe à carburant (6) vers le filtre fin (7) placé dans le pot d'accumulation (5), où la section (14) de la conduite d'alimentation (4) est limitée partiellement par la partie supérieure (16) et la partie inférieure (17).

2. Unité d'alimentation en carburant selon la revendication 1, **caractérisée par le fait que** les zones du fond (9) conduisant le carburant comportent le tube mélangeur (13) de la pompe à jet aspirant (10), le tube mélangeur (13) étant partiellement formé par la partie supérieure (16) et la partie inférieure (17).

3. Unité d'alimentation en carburant selon au moins l'une des revendication précédentes, **caractérisée par le fait que** la partie supérieure (16) du fond (9) et la chemise (8) colmatent un filtre fin (7) placé dans le pot d'accumulation (5).

4. Unité d'alimentation en carburant selon au moins l'une des revendication précédentes, **caractérisée par le fait que** la partie supérieure (16) et la partie inférieure (17) du fond (9) comportent chacune des bordures (20, 21) annulaires se trouvant l'une contre l'autre.

5. Unité d'alimentation en carburant selon au moins l'une des revendication précédentes, **caractérisée par le fait que** au moins l'une des bordures (20, 21) de la partie supérieure (16) ou de la partie inférieure (17) est étanche par rapport à la chemise (8) du pot d'accumulation (5).

6. Unité d'alimentation en carburant selon au moins l'une des revendication précédentes, **caractérisée par le fait que** le tube mélangeur (13) est lié d'une façon étanche à un tuyau de refoulement (12) fabriqué avec la chemise (8) du pot d'accumulation (5) et que le tuyau de refoulement (12) s'étend jusque dans une région du remplissage maximum prévu du pot d'accumulation (5), qui est éloignée du fond (9).

7. Unité d'alimentation en carburant selon au moins l'une des revendication précédentes, **caractérisée par le fait qu**'une section (15) de la conduite d'alimentation (4) qui part du filtre fin (7) est fabriquée en une seule pièce avec la chemise (8) du pot d'accumulation (5).

8. Unité d'alimentation en carburant selon au moins l'une des revendication précédentes, **caractérisée par le fait que** des raccordements (18, 19) du gicleur (11) de la pompe à jet aspirant (10) et de la section (14) de la conduite d'alimentation (4) qui va de la pompe à carburant (6) au filtre fin (7) sont orientés perpendiculairement à la surface du fond (9) du pot d'accumulation (5).
